# EUROPEAN PATENT SPECIFICATION

(11) **EP 3 804 837 B1**
(45) Date of publication and mention of the grant of the patent: **04.09.2024**
(21) Application number: 19815296.9
(22) Date of filing: 06.06.2019
(51) Int. Cl.: B01D 53/26, B60T 17/00

(54) **AIR SUPPLY SYSTEM**
LUFTZUFUHRSYSTEM
SYSTÈME D'ALIMENTATION EN AIR

(30) Priority: 08.06.2018 JP 2018110642; 08.06.2018 JP 2018110641
(43) Date of publication of application: 14.04.2021
(73) Proprietor: Nabtesco Automotive Corporation, Tokyo 102-0093 (JP)
(72) Inventor: ITADANI Syouji, Tokyo 102-0093 (JP); TANAKA Katsunori, Tokyo 102-0093 (JP)
(74) Representative: Grünecker Patent- und Rechtsanwälte PartG mbB
(86) International application number: PCT/JP2019/022587
(87) International publication number: WO 2019/235583

(56) References cited:
- WO-A1-2015/170737
- WO-A1-2015/170737
- DE-A1- 102012 021 597
- JP-A- 2010 221 179
- JP-A- 2012 140 107
- JP-A- 2012 140 107
- US-A- 5 592 754
- US-A1- 2017 036 162
- US-A1- 2017 036 162

## Description

### TECHNICAL FIELD

The present disclosure relates to an air supply system that supplies compressed air to devices.

### BACKGROUND ART

In vehicles such as trucks, buses, construction machines, and the like, compressed air fed from a compressor is used to control an air pressure system such as brakes, a suspension, and the like. The compressed air contains liquid impurities such as moisture, which is suspended in the atmosphere, and oil for lubricating the interior of the compressor. The entrance of compressed air containing a large amount moisture and oil into an air pressure system will cause rust and swelling of rubber members and result in operational failure. Thus, a compressed-air drying device that removes impurities such as moisture and oil from the compressed air is arranged downstream to the compressor. Such an air supply system is known from WO 2015/170737 A1.

The compressed-air drying device performs a loading operation (dehumidification operation) that removes oil and moisture and an unloading operation (regeneration operation) that extracts the oil and moisture adsorbed with a desiccant and drains the oil and moisture. An air dryer discharges the drainage to an oil separator to prevent the drainage from being discharged onto the road. In the oil separator, the air containing oil and moisture is struck against impingement members to separate gas and liquid in order to collect the oil and the purified air is discharged (refer to Patent Document 1).
Furthermore, JP 2012 140 107 A and DE 10 2012 021 597 A1 disclose an air supply system according to the preamble of claim 1.

### PRIOR ART DOCUMENT

### Patent Document

Patent Document 1: Japanese Laid-Open Patent Publication No. 2013-234632

### SUMMARY OF THE INVENTION

### Problems that the Invention is to Solve

A purging operation and a regeneration operation consume a certain amount of compressed air. Thus, even though the purging action and the regeneration operation are necessary for discharging purified air, the operation load on the compressor will increase. The increase in the operation load on the compressor that generates compressed air with rotational force transmitted from a rotary drive source such as an engine will increase the load on the rotary drive source and increase the consumption amount of energy such as fuel.

It is an object of the present disclosure to provide an air supply system that reduces the load on a compressor.

To continuously supply purified air from an air dryer of which purging function declines in accordance with the amount of compressed air supply, a regeneration operation and a purging operation are necessary to reverse the flow of compressed air and restore the purging function of the air dryer. For example, the purging operation is performed whenever an unloading operation is performed and the regeneration operation is performed in accordance with the number of times unloading is performed and the elapsed time. Such a purging operation and a regeneration operation consume compressed air and increase the engine load to a certain extent. Vehicles have been required to improve fuel efficiency. Thus, there is room for improvement in maintaining the functionality of the air dryer while reducing consumption of the compressed air by optimizing executing conditions instead of automatically performing a purging operation and a regeneration operation.

It is an object of the present disclosure to provide an air supply system that reduces the amount of consumption of compressed air.

### Means for Solving the Problems

In order to achieve said object, an air supply system according to claim 1 is provided. According to one aspect disclosed herein, an air supply system includes a compressor including a load operation mode, in which the compressor feeds compressed air, and an idling operation mode, in which the compressor does not feed compressed air; a desiccant configured to remove moisture from the compressed air fed by the compressor; a connection passage that connects the compressor and the desiccant, where the connection passage permits the compressed air to flow; a first electromagnetic valve configured to selectively switch the compressor between the load operation mode and the idling operation mode, where the compressor is configured to be switched to the idling operation mode when the first electromagnetic valve is activated, and the compressor is configured to be switched to the load operation mode when the first electromagnetic valve is deactivated; a drain discharge valve that is connected to a branch passage branched from the connection passage, where the drain discharge valve is configured to open the branch passage when a second electromagnetic valve is activated, and the drain discharge valve is configured to close the branch passage when the second electromagnetic valve is deactivated; and a controller configured to switch activation and deactivation of the first electromagnetic valve and activation and deactivation of the second electromagnetic valve.

### BRIEF DESCRIPTION OF THE DRAWINGS

Fig. 1 is a schematic diagram showing the configuration of an air supply system according to a first embodiment.

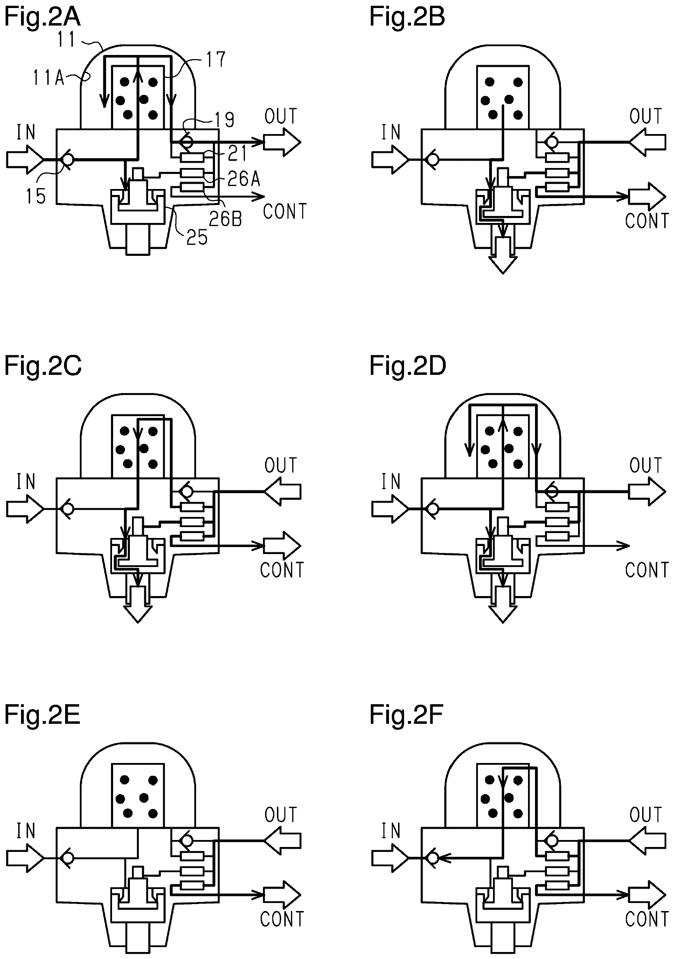

Fig. 2A is a diagram showing a first operation mode among operation modes of an air dryer in the first embodiment, Fig. 2B is a diagram showing a second operation mode among the operation modes of the air dryer in the first embodiment, Fig. 2C is a diagram showing a third operation mode among the operation modes of the air dryer in the first embodiment, Fig. 2D is a diagram showing a fourth operation mode among the operation modes of the air dryer in the first embodiment, Fig. 2E is a diagram showing a fifth operation mode among the operation modes of the air dryer in the first embodiment, Fig. 2F is a diagram showing a sixth operation mode among the operation modes of the air dryer in the first embodiment.
Fig. 3 is a flowchart showing an example of a procedure for supplying compressed air in the first embodiment.
Fig. 4 is a flowchart showing an example of a procedure for performing a regeneration process on the air dryer in the first embodiment.
Fig. 5 is a flowchart showing an example of a procedure for performing an idling operation of a compressor in the first embodiment.
Fig. 6 is a flowchart showing an example of a procedure for performing pressure adjustment in a connection passage in the first embodiment.
Fig. 7 is a flowchart showing an example of a procedure for performing pressure adjustment in a connection passage of the air supply system according to a second embodiment.
Fig. 8 is a flowchart showing an example of a procedure for performing pressure adjustment in the connection passage of the air supply system according to a third embodiment.
Fig. 9 is a flowchart showing an example of a procedure for performing pressure adjustment in the connection passage of the air supply system according to a fourth embodiment.
Fig. 10 is a flowchart showing an example of a procedure for performing pressure adjustment in the connection passage of the air supply system according to a fifth embodiment.
Fig. 11 is a flowchart showing an example of a procedure for performing an oil cut operation in the fifth embodiment.
Fig. 12 is a flowchart showing an example of a procedure for performing a regeneration operation based on the humidity in the air supply system according to a sixth embodiment.
Fig. 13 is a flowchart showing an example of a procedure for supplying compressed air according to a seventh embodiment.
Fig. 14 is a flowchart showing an example of a procedure for performing a regeneration process on the air dryer in the seventh embodiment.
Fig. 15 is a flowchart showing an example of a procedure for performing an idling operation on the compressor in the seventh embodiment.
Fig. 16 is a flowchart showing an example of a procedure for performing pressure adjustment in the connection passage in the seventh embodiment.

### MODES FOR CARRYING OUT THE INVENTION

### First embodiment

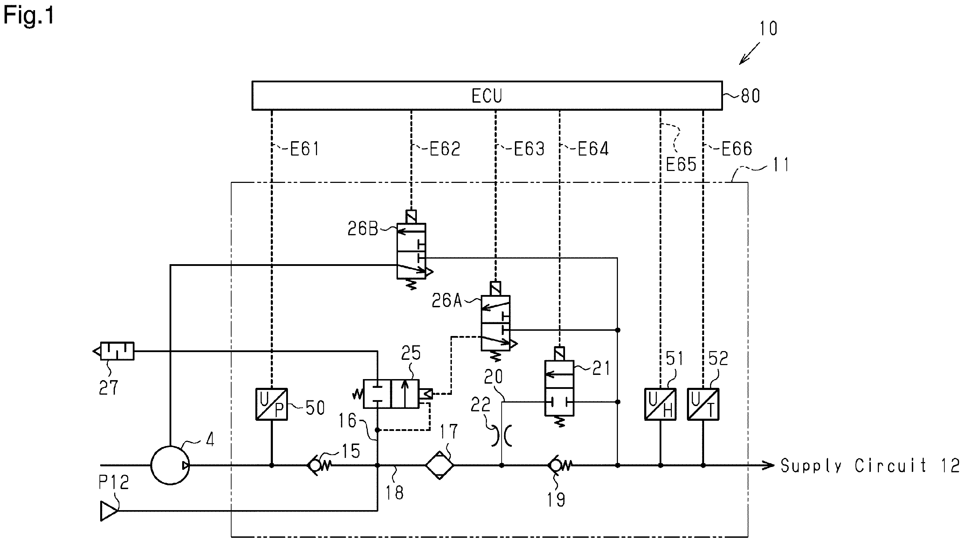

An air supply system according to a first embodiment will now be described with reference to Figs. 1 to 6. The air supply system is installed in automobiles such as trucks, buses, and construction machines.

### Configuration of air supply system 10

The configuration of an air supply system 10 will now be described with reference to Fig. 1. The air supply system 10 includes a compressor 4, an air drying circuit 11, and an ECU 80 that serves as a controller. The controller or its elements may be circuitry including: 1) one or more processors that operate according to a computer program (software); 2) one or more dedicated hardware circuits (such as application-specific integrated circuits: ASIC) that execute at least part of various processes, or 3) a combination thereof. The processor includes a CPU and memories such as RAM and ROM. The memories store program codes or commands configured to have the CPU execute processes. The memories, or computer-readable media, include any type of media that are accessible by general-purpose computers or dedicated computers.

The ECU 80 of the air supply system 10 is connected to multiple wires E61 to E66. The ECU 80 includes a processor, a volatile storage, and a nonvolatile storage . The ECU 80 is configured to feed an instruction value to the air drying circuit 11 in accordance with a program stored in the nonvolatile storage.

The compressor 4 is selectively switched, based on the instruction value sent by the ECU 80, between an operation state (load operation mode) in which air is compressed and supplied and a non-operation state (idling operation mode) in which air compression is not performed. That is, the compressor 4 includes the load operation mode in which the compressor 4 feeds compressed air and the idling operation mode in which the compressor 4 does not feed compressed air.

The air drying circuit 11 includes, for example, an air dryer. The air drying circuit 11 is connected to the ECU 80 and dries compressed air fed from the compressor 4 during a load operation. The air drying circuit 11 sends dried compressed air to a supply circuit 12.

The supply circuit 12 stores the compressed air, which is fed from the air drying circuit 11, in an air tank (not shown) installed in a vehicle and supplies the compressed air to a load (not shown).

The air drying circuit 11 includes a maintenance port P12. The maintenance port P12 supplies air to the air drying circuit 11 during maintenance.

### Configuration of air drying circuit 11

The air drying circuit 11 includes a filter 17 in an inner portion 11A (refer to Figs. 2A to 2F). In the first embodiment, the filter 17 is arranged in an air supply passage 18 that is connected to the compressor 4 and the supply circuit 12. The filter 17 corresponds to a desiccant. The air supply passage 18 corresponds to a connection passage.

The filter 17 allows air to pass through the desiccant to dry the air by removing moisture from the air and purify the air at a filtration portion by removing oil from the air. The air that has passed through the filter 17 is supplied to the supply circuit 12 via a downstream check valve 19 that permits only a flow of air from the filter 17 to the downstream side. That is, the downstream check valve 19 permits only the flow of air from the upstream side where the filter 17 is located to the downstream side where the supply circuit 12 is located. The downstream check valve 19 has a predetermined valve opening pressure (sealing pressure). Thus, when compressed air flows, the upstream pressure is higher than the downstream pressure by the valve opening pressure.

At the downstream side of the filter 17, a bypass passage 20 that bypasses the downstream check valve 19 is arranged in parallel with the downstream check valve 19. The bypass passage 20 includes a regeneration control valve 21. That is, the regeneration control valve 21 is arranged in the passage that is connected in parallel to the passage in which the downstream check valve 19 is arranged.

The regeneration control valve 21 includes an electromagnetic valve that switches operations in accordance with the activation and deactivation (driving/non-driving) of power from the ECU 80 via the wire E64. The regeneration control valve 21 is closed when the power goes off to close the bypass passage 20 and is opened when the power goes on to open the bypass passage 20. The ECU 80 receives, for example, the value of the air pressure inside the air tank and operates the regeneration control valve 21 if the air pressure value exceeds a predetermined range.

The bypass passage 20 includes an orifice 22 between the regeneration control valve 21 and the filter 17. When the regeneration control valve 21 is energized, the compressed air flowing toward the supply circuit 12 is fed to the filter 17 via the bypass passage 20 as the orifice 22 regulates the flow rate. The flow of air fed to the filter 17 is reversed from the upstream side of the filter 17 toward the downstream side so as to pass through the filter 17. Such a process regenerates the filter 17 and is referred to as a regeneration process on a dryer. Since the compressed air fed to the filter 17 is dried and purified air from the air supply passage 18 that has passed through the filter 17 and is supplied to the supply circuit 12, the moisture and oil trapped in the filter 17 is removed from the filter 17. Thus, the ECU 80 opens the regeneration control valve 21 for a predetermined period. The predetermined period is set based on logic, experiments, or experience to a period that allows for regeneration of the filter 17.

A branch passage 16 between the compressor 4 and the filter 17 is connected to a drain discharge valve 25. That is, the branch passage 16 branches from the air supply passage 18. A drain discharge port 27 is arranged at the end of the branch passage 16.

The drainage containing moisture and oil removed from the filter 17 is fed together with compressed air to the drain discharge valve 25. The drain discharge valve 25 is a pneumatically driven valve that is driven by air pressure. The drain discharge valve 25 is arranged between the filter 17 and the drain discharge port 27 in the branch passage 16 branching from the air supply passage 18. The drain discharge valve 25 is a two-port two-position valve that changes positions between a closed position and an open position. The drain discharge valve 25 in the open position sends drainage to the drain discharge port 27. The drainage discharged from the drain discharge port 27 may be collected by an oil separator (not shown).

The drain discharge valve 25 is controlled by a governor 26A. The governor 26A is an electromagnetic valve that is actuated by the activation and deactivation (driving/non-driving) of power from the ECU 80 via the wire E63. The governor 26A, when activated, inputs an air pressure signal to the drain discharge valve 25 to open the drain discharge valve 25. The governor 26A, when deactivated, closes the drain discharge valve 25 by setting the drain discharge valve 25 to the atmospheric pressure instead of inputting an air pressure signal to the drain discharge valve 25. The governor 26A corresponds to a second electromagnetic valve.

The drain discharge valve 25 is maintained in the closed position when receiving no air pressure signal from the governor 26A. The drain discharge valve 25 is in the open position when receiving an air pressure signal from the governor 26A. If the pressure of an input port of the drain discharge valve 25 at the side closer to the compressor 4 is high and exceeds an upper limit value, the drain discharge valve 25 is forcibly switched to the open position.

An upstream check valve 15 is arranged between the compressor 4 and the filter 17 and between the compressor 4 and the branch passage 16. When the side toward the compressor 4 is referred to as the upstream side and the side toward the filter 17 is referred to as the downstream side, the upstream check valve 15 permits only the flow of air from the upstream side toward the downstream side. The upstream check valve 15 has a predetermined valve opening pressure (sealing pressure). Thus, when compressed air flows, the upstream pressure is higher than the downstream pressure by an amount corresponding to the valve opening pressure. A reed valve located at the upstream side of the upstream check valve 15 is arranged in the outlet of the compressor 4. The branch passage 16 and the filter 17 are arranged at the downstream side of the upstream check valve 15.

### Compressor 4

The compressor 4 is controlled by an unloading control valve 26B. The unloading control valve 26B is an electromagnetic valve that is actuated by the activation and deactivation (driving/non-driving) of power from the ECU 80 via the wire E62. The unloading control valve 26B, when deactivated, shifts to an open position to open the passage extending to the compressor 4 to the atmosphere. The unloading control valve 26B, when activated, shifts to a supply position and sends an air pressure signal of compressed air to the compressor 4. The unloading control valve 26B and the governor 26A are separately controlled. The unloading control valve 26B corresponds to a first electromagnetic valve.

The compressor 4, when receiving an air pressure signal from the unloading control valve 26B, is in a non-operation state (idling operation). For example, if the pressure of the supply circuit 12 reaches the upper limit pressure, there is no need to supply dry and compressed air. The pressure of the supply circuit 12, which is measured by a pressure sensor (not shown), is input to the ECU 80. The unloading control valve 26B shifts to a supply position when activated (activated) by the ECU 80 based on the measurement result of the pressure sensor. This supplies an air pressure signal from the unloading control valve 26B to the compressor 4.

### Sensor

A pressure sensor 50 is arranged between the compressor 4 and the upstream check valve 15. The pressure sensor 50 measures the air pressure of the air supply passage 18 where the pressure sensor 50 is connected and sends the measurement result to the ECU 80 via the wire E61.

A humidity sensor 51 and a temperature sensor 52 are arranged between the downstream check valve 19 and the supply circuit 12. The humidity sensor 51 measures the humidity of the compressed air, and the temperature sensor 52 measures the temperature of the compressed air at the downstream side of the filter 17. The humidity sensor 51 and the temperature sensor 52 output the measurement results to the ECU 80 via the wires E65, E66. The ECU 80 calculates a dew point based on the input humidity and temperature of the compressed air. The humidity sensor 51, the temperature sensor 52, and the ECU 80 may form a humidity measurement unit. For example, when the humidity of compressed air output by the compressor 4 is substantially 100%, the amount of moisture removed by the filter 17 can be calculated based on the difference from the humidity measured as 100% and the amount of saturated steam at the temperature.

### Operation of air drying circuit 11

As shown in Figs. 2A to 2F, the air drying circuit 11 has six operation modes, namely, a first operation mode to a sixth operation mode.

As shown in Fig. 2A, the first operation mode is for performing a normal loading operation for a supply process. The first operation mode closes the regeneration control valve 21, the governor 26A, and the unloading control valve 26B. That is, the regeneration control valve 21, the governor 26A, and the unloading control valve 26B are each closed. In this case, none of the regeneration control valve 21, the governor 26A, and the unloading control valve 26B is supplied with power. Further, the governor 26A and the unloading control valve 26B open ports of the compressor 4 and the drain discharge valve 25, which are connected to the downstream sides of the governor 26A and the unloading control valve 26B, to the atmosphere. In the first operation mode, when compressed air is being supplied from the compressor 4, the desiccant removes moisture and oil from the compressed air supplied to the supply circuit 12. That is, the compressor 4 is on.

As shown in Fig. 2B, the second operation mode is for performing a compressor stop operation (process with purging) for a purging process. The second operation mode closes the regeneration control valve 21 and opens the governor 26A and the unloading control valve 26B. That is, the regeneration control valve 21 is closed. The governor 26A and the unloading control valve 26B are opened. In this case, the governor 26A and the unloading control valve 26B are supplied with power and connect the port of the compressor 4 and the port of the drain discharge valve 25, which are connected at the downstream sides of the governor 26A and the unloading control valve 26B, to the upstream sides (supply circuit 12). In the second operation mode, when the compressor 4 is in a non-operation state, the compressed air in the desiccant of the filter 17 and the air supply passage 18 is discharged from the drain discharge port 27 together with moisture, oil, and the like, and the air pressure of the desiccant of the filter 17 and the air supply passage 18 is equal to the atmospheric pressure. That is, the compressor 4 is off.

As shown in Fig. 2C, the third operation mode is for performing a regeneration operation for a regeneration process. The third operation mode opens the regeneration control valve 21, the governor 26A, and the unloading control valve 26B. In this case, the regeneration control valve 21 is supplied with power. In the third operation mode, the compressor 4 is in a non-operation state and the compressed air in the supply circuit 12 flows back in the filter 17 (through desiccant) and is discharged from the drain discharge port 27 to remove moisture from the desiccant of the filter 17.

As shown in Fig. 2D, the fourth operation mode is for performing an oil cut operation. The fourth operation mode closes the regeneration control valve 21 and the unloading control valve 26B and opens the governor 26A for a fixed period and then closes the governor 26A. In the fourth operation mode, the compressor 4 is in an operation state and the compressed air supplied from the compressor 4 is discharged from the drain discharge port 27 for a fixed period so that, for example, the compressed air containing a relatively large amount of oil immediately after switching from a non-operation state to an operation state is discharged from the drain discharge port 27. This retards deterioration of the filter 17. The oil cut operation may be performed if oil from the operating compressor 4 increases such as when the engine rotation speed rises or the load on the engine increases.

As shown in Fig. 2E, the fifth operation mode is for performing a compressor stop operation (non-purging process). The fifth operation mode closes the regeneration control valve 21 and the governor 26A and opens the unloading control valve 26B. In the fifth operation mode, the compressor 4 is in a non-operation state and compressed air remaining in the air supply passage 18 and the desiccant of the filter 17 is not discharged from the drain discharge port 27 to maintain the air pressure.

As shown in Fig. 2F, the sixth operation mode is for performing an assist operation for a pressurization process. The sixth operation mode opens the regeneration control valve 21 and the unloading control valve 26B and closes the governor 26A. In the sixth operation mode, the compressor 4 is in a non-operation state and the compressed air of the supply circuit 12 is supplied (flows back) to the air supply passage 18 and the desiccant of the filter 17 so that the pressure becomes higher than the atmospheric pressure. This maintains the back pressure (air pressure) of the upstream check valve 15 at a pressure higher than the atmospheric pressure.

### Compressor assist operation

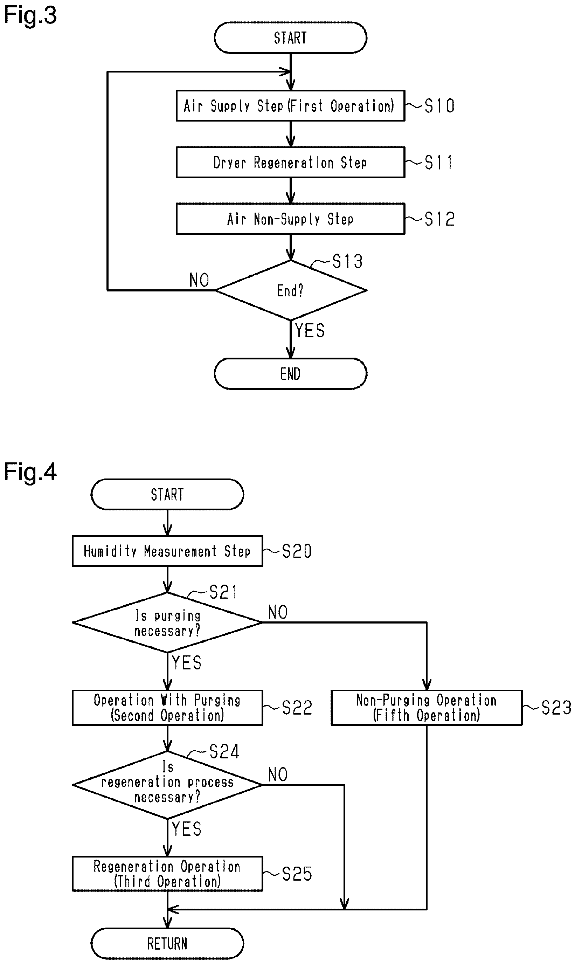

A compressor assist operation will now be described with reference to Figs. 3 to 6.

When a piston descends during an idling operation, the compressor 4 generates negative pressure inside a cylinder as the volume increases. The negative pressure increases the operation load. Compressor assist reduces the increase in the operation load caused by negative pressure. Specifically, when the piston of the compressor 4 descends during an idling operation, compressor assist maintains the desiccant of the filter 17 and the air supply passage 18 at a higher pressure than the atmospheric pressure. This closes the reed valve in the outlet of the compressor 4 and maintains the pressure generated in the cylinder when the piston ascends to a certain extent to limit the generation of negative pressure inside the cylinder. Thus, the operation load on the compressor 4 is reduced during an idling operation. Specifically, during the idling operation of the compressor 4, the drain discharge valve 25 is closed so that compressed air supplied from the compressor 4 maintains the desiccant of the filter 17 and the air supply passage 18 at a higher pressure than the atmospheric pressure.

When starting the supply of compressed air, the air supply system 10 performs an air supply step that supplies compressed air, which is output from the compressor 4, to the supply circuit 12 (step S10 in Fig. 3). In the air supply step, the air drying circuit 11, which is in the first operation mode, removes moisture and oil from the compressed air, which is supplied from the compressor 4, and outputs the compressed air to the supply circuit 12. The air supply step ends if the air pressure of the supply circuit 12, such as the air pressure inside the air tank, exceeds an upper limit value.

When the air supply operation ends in the air supply step (step S10 in Fig. 3), the air supply system 10 shifts the compressor 4 to a non-operation state and performs a dryer regeneration step (step S11 in Fig. 3). In the dryer regeneration step, a dryer regeneration process that regenerates the filter 17 is performed.

As shown in Fig. 4, in the dryer regeneration process, the ECU 80 performs a humidity measurement step (step S20 in Fig. 4). In the humidity measurement step, the humidity of the compressed air is measured based on the humidity measured by the humidity sensor 51 and the temperature measured by the temperature sensor 52.

Then, the ECU 80 determines whether the filter 17 needs to be purged (step S21 in Fig. 4). The ECU 80 determines that purging is necessary if the humidity of the compressed air is greater than or equal to a first humidity threshold value. The ECU 80 determines that purging is unnecessary if the humidity of the compressed air is less than the first humidity threshold value. The necessity of purging may be determined based on the amount of gas flowing through the filter and the amount of oil in the filter.

When determining that purging is necessary (YES in step S21 in Fig. 4), the ECU 80 shifts the air drying circuit 11 to the second operation mode to perform a compressor stop operation (process with purging) (step S22 in Fig. 4) and then determines whether a regeneration process on the filter 17 is necessary (step S24 in Fig. 4). The ECU 80 determines that a regeneration process is necessary if the humidity of the compressed air is greater than or equal to a second humidity threshold value. The ECU 80 determines that a regeneration process is unnecessary if the humidity of the compressed air is less than the second humidity threshold value.

When determining that a regeneration process is necessary (YES in step S24 in Fig. 4), the ECU 80 shifts the air drying circuit 11 to the third operation mode and performs a regeneration operation (step S25 in Fig. 4). When the regeneration process ends, the ECU 80 ends the dryer regeneration step (step S11 in Fig. 3) and proceeds to the next step.

When determining that a regeneration process is unnecessary (NO in step S24 in Fig. 4), the ECU 80 ends the dryer regeneration step (step S11 in Fig. 3) and proceeds to the next step.

When determining that purging is unnecessary (NO in step S21 in Fig. 4), the ECU 80 shifts the air drying circuit 11 to the fifth operation mode and performs a compressor stop operation (non-purging process) (step S23 in Fig. 4). By performing the compressor stop operation (non-purging process), the desiccant of the filter 17 and the air supply passage 18 are not exposed to the atmosphere after the compressor 4 is stopped. Thus, the back pressure of the upstream check valve 15 remains higher than the atmospheric pressure and allows compressor assist to be performed. Thus, the dryer regeneration step (step S11 in Fig. 3) ends and the next step is performed.

Subsequently, as shown in Fig. 3, the air supply system 10 performs an air non-supply step (step S12 in Fig. 3). In the air non-supply step, the ECU 80 performs an air non-supply process so that the back pressure of the upstream check valve 15 remains high during a compressor stop operation.

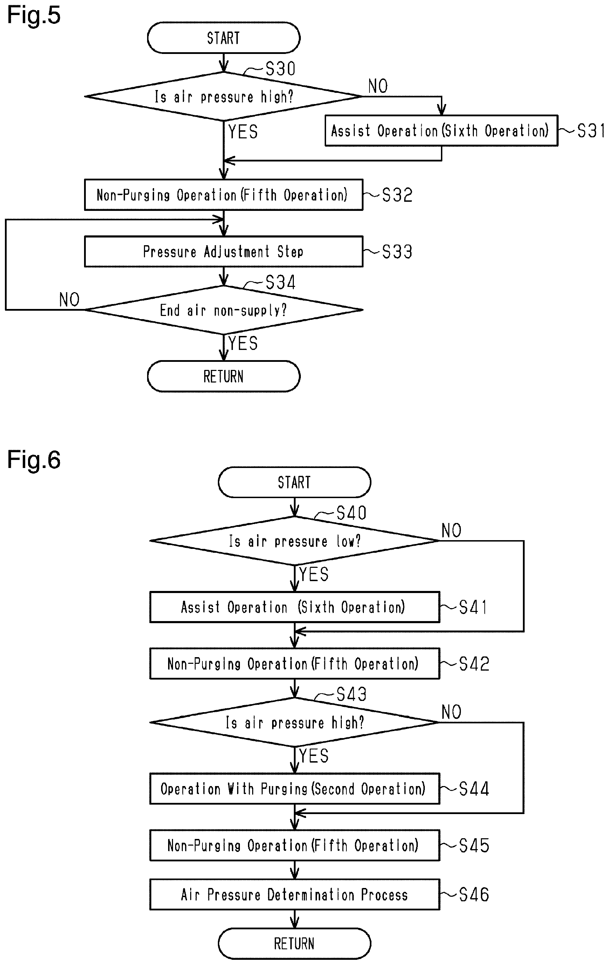

Specifically, as shown in Fig. 5, in the air non-supply process, the ECU 80 determines whether the air pressure in the desiccant of the filter 17 and the air supply passage 18 is high (step S30 in Fig. 5). The ECU 80 compares a measurement value of the pressure sensor 50 with a high pressure threshold value. The ECU 80 determines that the air pressure is high if the measurement value is greater than or equal to the high pressure threshold value. The ECU 80 determines that the air pressure is low if the measurement value is less than the high pressure.

When determining that the air pressure in the desiccant of the filter 17 and the air supply passage 18 is high (YES in step S30 in Fig. 5), the ECU 80 shifts the air drying circuit 11 to the fifth operation mode and performs a compressor stop operation (non-purging process) (step S32 in Fig. 5). When determining that the air pressure in the desiccant of the filter 17 and the air supply passage 18 is low (NO in step S30 in Fig. 5), the ECU 80 performs an assist operation (step S31 in Fig. 5). In the assist operation, the air drying circuit 11 is shifted to the sixth operation mode and the air pressure in the desiccant of the filter 17 and the air supply passage 18 is raised. Then, the air drying circuit 11 is shifted to the fifth operation mode to perform a compressor stop operation (non-purging process) (step S32 in Fig. 5). Thus, the back pressure of the upstream check valve 15 remains higher than the atmospheric pressure. This allows compressor assist to be performed.

Subsequently, the ECU 80 performs a pressure adjustment step (step S33 in Fig. 5). In the pressure adjustment step, the ECU 80 performs a pressure adjustment process.

As shown in Fig. 6, in the pressure adjustment process, the ECU 80 determines whether the air pressure in the desiccant of the filter 17 and the air supply passage 18 is low (step S40 in Fig. 6). The ECU 80 determines that the air pressure is low if a measurement value of the pressure sensor 50 is less than or equal to a low pressure threshold value. The ECU 80 determines that the air pressure is not low if the measurement value of the pressure sensor 50 is greater than the low pressure threshold value. In the first embodiment, the upstream check valve 15 is arranged at the downstream side of the pressure sensor 50 where the value of the pressure sensor 50 is stable. This reduces the number of times assist operations and purging operations are performed.

When determining that the air pressure is low (YES in step S40 in Fig. 6), the ECU 80 shifts the air drying circuit 11 to the sixth operation mode and performs an assist operation (step S41 in Fig. 6). Then, the ECU 80 shifts the air drying circuit 11 to the fifth operation mode and performs a compressor stop operation (non-purging process) (step S42 in Fig. 6). When determining that the air pressure is not low (NO in step S40 in Fig. 6), the ECU 80 shifts the air drying circuit 11 to the fifth operation mode and performs a compressor stop operation (non-purging process) (step S42 in Fig. 6).

The ECU 80 also determines whether the air pressure is high (step S43 in Fig. 6). The ECU 80 determines that the air pressure is high if a measurement value of the pressure sensor 50 is greater than or equal to a high pressure threshold value. The ECU 80 determines that the air pressure is not high if the measurement value of the pressure sensor 50 is less than the low pressure threshold value.

When determining that the air pressure is high (YES in step S43 in Fig. 6), the ECU 80 shifts the air drying circuit 11 to the second operation mode and performs a compressor stop operation (process with purging) (step S44 in Fig. 6). Then, the ECU 80 shifts the air drying circuit 11 to the fifth operation mode and performs a compressor stop operation (non-purging process) (step S45 in Fig. 6). When determining that the air pressure is not high (NO in step S43 in Fig. 6), the ECU 80 shifts the air drying circuit 11 to the fifth operation mode and performs a compressor stop operation (non-purging process) (step S45 in Fig. 6). This keeps the back pressure of the upstream check valve 15 higher than the atmospheric pressure and allows compressor assist to be performed. That is, the height of air pressure has a relationship expressed by "atmospheric pressure < low pressure threshold value < high pressure threshold value." Next, the ECU 80 performs an air pressure determination process (step S46 in Fig. 6). In the air pressure determination process, air pressure is determined to be appropriate if a measurement value of the pressure sensor 50 is less than the high pressure threshold value and greater than or equal to the low pressure threshold value. The air pressure is determined to be inappropriate if the measurement value is greater than or equal to the high pressure threshold value or less than the low pressure threshold value.

As shown in Fig. 5, when the pressure adjustment process ends, the pressure adjustment step ends and the next step is performed.

Subsequently, it is determined whether to end the air non-supply process (step S34 in Fig. 5). The ECU 80 determines to end the air non-supply process if the compressor 4 needs to perform a load operation. The ECU 80 determines not to end the air non-supply process if the compressor 4 does not need to perform the load operation.

More specifically, when determining not to end the air non-supply process (NO in step S34 in Fig. 5), the ECU 80 continues to perform the pressure adjustment (step S33 in Fig. 5). When determining to end the air non-supply process(YES in step S34 in Fig. 5), the ECU 80 ends the air non-supply step (step S13 in Fig. 3) and proceeds to the next step.

Then, as shown in Fig. 3, it is determined whether to end air supply (step S13 in Fig. 3). The ECU 80 determines to end the air supply based on the stopping of a vehicle engine or the like. The ECU 80 determines not to end the air supply based on continuous rotation of the vehicle engine or the like.

When determining not to end the air supply (NO in step S13 in Fig. 3), the ECU 80 returns to step S10 and performs the processes from the air supply step (step S10 in Fig. 3). When determining to end the air supply (YES in step S13 in Fig. 3), the ECU 80 stops the air supply.

As described above, the first embodiment has the following advantages.
(1) If an electromagnetic valve for an idling operation (unloading) of the compressor 4 is the same as an electromagnetic valve for switching the drain discharge valve 25, the air pressure in the air supply passage 18 and the desiccant will be equal to the atmospheric pressure during the idling operation of the compressor 4. Thus, the compressor 4 cannot draw air from the reed valve that is closed when the piston descends during the idling operation, and the pressure becomes negative in the cylinder and increases the operation load. With the above structure, the unloading control valve 26B switches the compressor 4 between a load operation and an idling operation, and the governor 26A switches the drain discharge valve 25 between a closed state and an open state. That is, the unloading control valve 26B and the governor 26A are separately controlled. Thus, during an idling operation of the compressor 4, the drain discharge valve 25 can be kept closed. For example, by keeping the drain discharge valve 25 closed, the air pressure provided by the compressor 4 can keep the air pressure in the air supply passage 18 and the air pressure of the desiccant of the filter 17 somewhat higher than the atmospheric pressure. Thus, the cylinder of the compressor 4 is maintained at a high pressure as the piston ascends, and the maintained pressure limits the negative pressure generated inside the cylinder when the piston descends. This reduces the load on the compressor 4.
(2) The branch passage 16 is closed for at least part of a period during an idling operation of the compressor 4. Thus, the air pressure in the air supply passage 18, to which the reed valve of the compressor 4 is connected, and the pressure of the desiccant of the filter 17 remain high. In particular, even when the compressor 4 is switched from a load operation to an idling operation, the drain discharge valve 25 remains closed to limit a decline in the air pressure in the air supply passage 18 and the desiccant of the filter 17.
(3) In the air supply passage 18, the air pressure from the reed valve, at the outlet of the compressor 4, to the upstream check valve 15 can be maintained by the sealing pressure of the upstream check valve 15.
(4) When the branch passage 16 is closed by the drain discharge valve 25 , the regeneration control valve 21 opens to supply the compressed air at the downstream side of the downstream check valve 19 and raise the air pressure in the air supply passage 18 and the desiccant of the filter 17.
(5) The air pressure in the air supply passage 18 and the filter 17 is adjusted to be higher than the atmospheric pressure by referring to a measurement result of the pressure sensor 50 and controlling the opening and closing of the regeneration control valve 21 in accordance with the air pressure in the air supply passage 18 and the desiccant of the filter 17.
(6) The pressure sensor 50 measures the air pressure in the desiccant of the filter 17 and the air supply passage 18, which is connected to the reed valve at the outlet of the compressor 4. The opening and closing of the regeneration control valve 21 is adjusted in accordance with the measured residual pressure.
(7) When the unloading control valve 26B is activated (during unloading), a non-purging process, a purging process, a regeneration process, and a pressurization process are performed when suitable.
(8) The air pressure in the air supply passage 18 and the desiccant of the filter 17 is maintained at a predetermined value that is higher than the atmospheric pressure. Further, the air pressure is maintained at a predetermined value with higher accuracy through feedback processing by referring to values of the pressure sensor 50.
(9) The air pressure in the air supply passage 18 and the desiccant of the filter 17 decreased to the atmospheric pressure during a regeneration process is raised to a pressure higher than the atmospheric pressure.

### Second embodiment

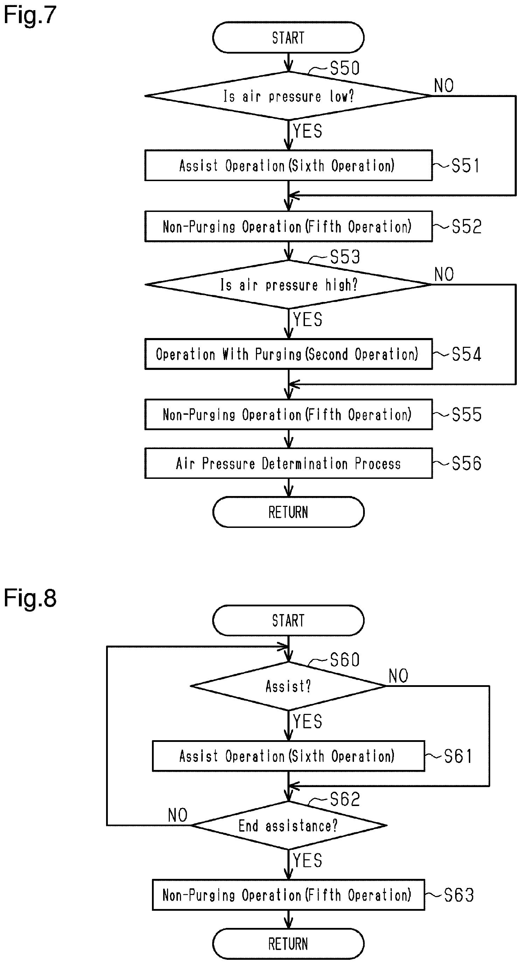

The air supply system according to a second embodiment will now be described with reference to Fig. 7. The second embodiment differs from the first embodiment in that the air supply passage 18 does not include the upstream check valve 15. That is, the second embodiment does not include the upstream check valve 15 of the first embodiment shown in Fig. 1.

In the second embodiment, a compressor assist operation is performed so that the ECU 80 performs the pressure adjustment step (step S33 in Fig. 5) of the first embodiment shown in Fig. 5. In the pressure adjustment step, the ECU 80 performs a pressure adjustment process.

As shown in Fig. 7, in the pressure adjustment process, the ECU 80 determines whether the air pressure in the desiccant of the filter 17 and the air supply passage 18 is low (step S50 in Fig. 7). In the second embodiment, the pressure sensor 50 is arranged between the compressor 4 and the filter 17, and there is no upstream check valve. Thus, the value of the pressure sensor 50 may be somewhat unstable as compared with the configuration of the first embodiment. However, the pressure adjustment process will be performed in a preferred manner by relatively increasing the number of times assist operations and purging operations are performed.

When determining that the air pressure is low (YES in step S50 in Fig. 7), the ECU 80 performs an assist operation (step S51 in Fig. 7). When determining that the air pressure is not low (NO in step S50 in Fig. 7) or when the assist operation in step S51 ends, the ECU 80 performs a compressor stop operation (non-purging process) (step S52 in Fig. 7).

Subsequently, the ECU 80 determines whether the air pressure is high (step S53 in Fig. 7).

When determining that the air pressure is high (YES in step S53 in Fig. 7), the ECU 80 performs a compressor stop operation (process with purging) (step S54 in Fig. 7). When determining that the air pressure is not high (NO in step S53 in Fig. 7) or when the purging operation in step S54 ends, the ECU 80 performs a compressor stop operation (non-purging process) (step S55 in Fig. 7). This keeps the air pressure in the desiccant of the filter 17 and the air supply passage 18, arranged at the upstream side of the downstream check valve 19, higher than the atmospheric pressure and allows compressor assist to be performed. The ECU 80 also performs an air pressure determination process (step S56 in Fig. 7). In the air pressure determination process, the ECU 80 determines that the air pressure is appropriate if a measurement value is less than a high pressure threshold value and greater than or equal to a low pressure threshold value. The ECU 80 determines that the air pressure is inappropriate in other cases.

As described above, the second embodiment has the following advantage in addition to the advantages (1), (2), (4), (5), and (7) to (9) of the first embodiment.
(10) Although the upstream check valve 15 is not included, during an idling operation of the compressor 4, the drain discharge valve 25 is kept closed so that the air pressure in the desiccant of the filter 17 and the air supply passage 18 remains somewhat higher than the atmospheric pressure. This reduces the load on the compressor 4.

### Third embodiment

The air supply system according to a third embodiment will now be described with reference to Fig. 8. The third embodiment differs from the first embodiment in that the air supply passage 18 does not include the pressure sensor 50. That is, the third embodiment does not include the pressure sensor 50 of the first embodiment shown in Fig. 1.

In the third embodiment, a compressor assist operation is performed so that the ECU 80 performs the pressure adjustment step (step S33 in Fig. 5) of the first embodiment shown in Fig. 5. In the pressure adjustment step, the ECU 80 performs a pressure adjustment process.

As shown in Fig. 8, in the pressure adjustment process, the ECU 80 determines whether to perform assistance (step S60 in Fig. 8). The third embodiment includes the upstream check valve 15. Thus, the ECU 80 determines that assistance is unnecessary if, subsequent to a compressor stop, a compressor stop operation (non-purging process) is performed or the preceding operation is an assist operation. The ECU 80 determines that assistance is necessary if the preceding operation is a compressor stop operation (process with purging) or a regeneration operation.

When determining that assistance is necessary (YES in step S60 in Fig. 8), the ECU 80 performs an assist operation (step S61 in Fig. 8). When determining that assistance is unnecessary (NO in step S60 in Fig. 8) or when the assist operation in step S61 ends, the ECU 80 determines whether to end the assist operation (step S62 in Fig. 8). If a condition for the compressor 4 to perform a load operation is satisfied, the ECU 80 determines to end the assistance.

When determining not to end the assistance (NO in step S62 in Fig. 8), the ECU 80 returns to step S60 and continues the operation determined in accordance with the necessity of the assist operation. When determining to end the assistance (YES in step S62 in Fig. 8), the ECU 80 performs a compressor stop operation (non-purging process) (step S63 in Fig. 8). Then, the ECU 80 returns to the pressure adjustment step and proceeds to the step following the pressure adjustment step.

As described above, the third embodiment has the following advantage in addition to advantages (1) to (4) and (6) to (9) of the first embodiment.
(11) Although the pressure sensor 50 is not included, during an idling operation of the compressor 4, the drain discharge valve 25 is kept closed so that the air pressure in the desiccant of the filter 17 and the air supply passage 18 is kept somewhat higher than the atmospheric pressure by the sealing pressure of the upstream check valve 15. This reduces the load on the compressor 4.

### Fourth embodiment

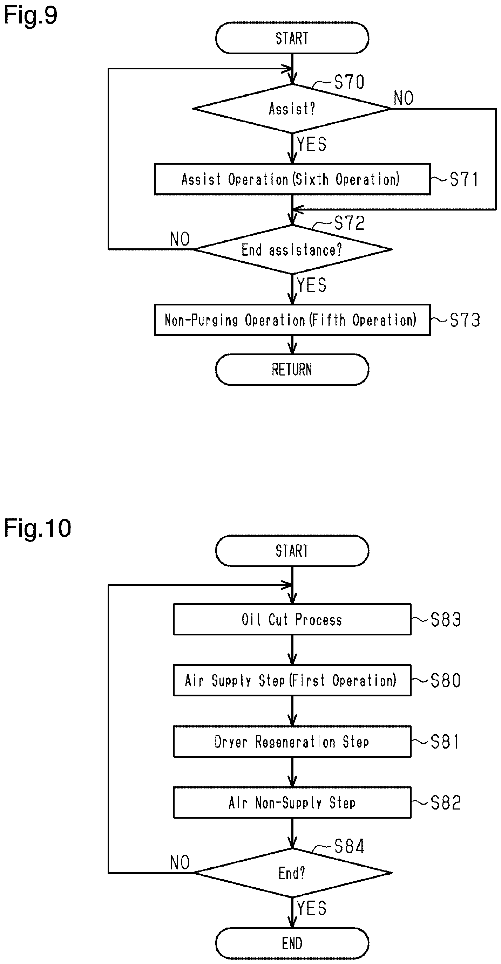

The air supply system according to a fourth embodiment will now be described with reference to Fig. 9. The fourth embodiment differs from the first embodiment in that the air supply passage 18 does not include the pressure sensor 50 or the upstream check valve 15. That is, the fourth embodiment includes neither the pressure sensor 50 nor the upstream check valve 15 of the first embodiment shown in Fig. 1.

In the fourth embodiment, a compressor assist operation is performed so that the ECU 80 performs the pressure adjustment step (step S33 in Fig. 5) of the first embodiment shown in Fig. 5. In the pressure adjustment step, the ECU 80 performs a pressure adjustment process. The fourth embodiment does not include an upstream check valve. Thus, air pressure may be somewhat unstable as compared with the first embodiment. Further, a pressure sensor is arranged, and feedback control cannot be performed based on air pressure. Thus, control for a pressure adjustment process is performed based on a predetermined condition.

As shown in Fig. 9, in the pressure adjustment process, the ECU 80 determines whether to perform assistance (step S70 in Fig. 9). The fourth embodiment includes neither the pressure sensor 50 nor the upstream check valve 15. Thus, the ECU 80 determines that assistance is unnecessary if, subsequent to a compressor stop, a compressor stop operation (non-purging process) is performed or the preceding operation is an assist operation. The ECU 80 determines that assistance is necessary if a compressor stop operation (process with purging) has been performed or a regeneration operation has been performed.

When determining that assistance is necessary (YES in step S70 in Fig. 9), the ECU 80 performs an assist operation (step S71 in Fig. 9). When determining that assistance is unnecessary (NO in step S70 in Fig. 9) or when the assist operation in step S71 ends, the ECU 80 determines whether to end the assist operation (step S72 in Fig. 9). If a condition for the compressor 4 to perform a load operation is satisfied, the ECU 80 determines to end the assistance.

When determining not to end the assistance (NO in step S72 in Fig. 9), the ECU 80 returns to step S70 and performs the operation determined in accordance with the necessity of the assist operation. When determining to end the assistance (YES in step S72 in Fig. 9), the ECU 80 performs a compressor stop operation (non-purging process) (step S73 in Fig. 9). Then, the ECU 80 returns to the pressure adjustment step and proceeds to the step following the pressure adjustment step.

As described above, the fourth embodiment has the following advantage in addition to advantages (1), (2), (4), and (7) to (9) of the first embodiment.
(12) Neither the pressure sensor 50 nor the upstream check valve 15 is included. Nevertheless, during an idling operation of the compressor 4, the drain discharge valve 25 is kept closed so that the air pressure in the air supply passage 18 and the desiccant of the filter 17 remains somewhat higher than the atmospheric pressure. This reduces the load on the compressor 4.

### Fifth embodiment

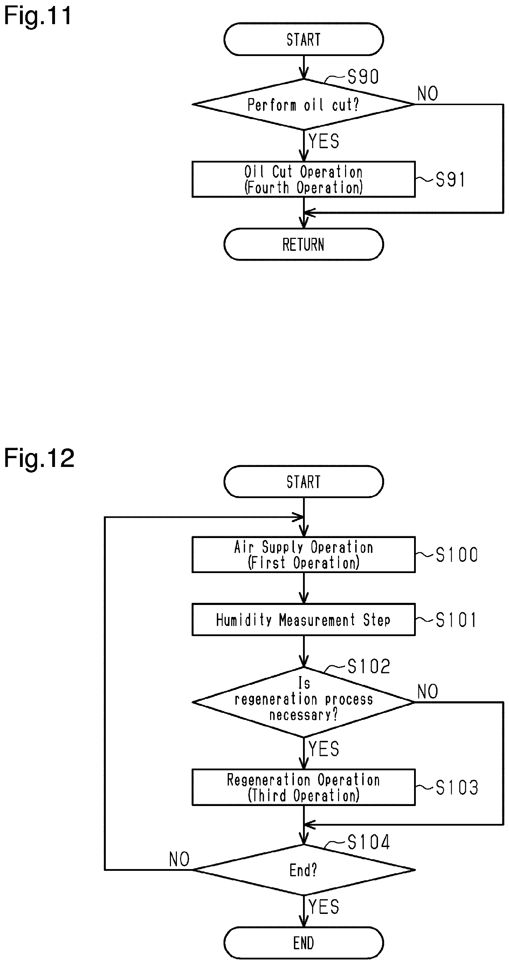

The air supply system according to a fifth embodiment will now be described with reference to Figs. 10 and 11. The fifth embodiment differs from the first embodiment in that an oil cut process is performed during a normal load operation.. In the following example, an oil cut process is performed when a load operation starts.

As shown in Fig. 10, the air supply system 10 starts supplying air and performs an oil cut process in an oil cut step (step S83 in Fig. 10).

As shown in Fig. 11, in the oil cut process, the ECU 80 determines whether to perform oil cut (step S90 in Fig. 11). When determining that oil cut is necessary (YES in step S90 in Fig. 11), the ECU 80 shifts the air drying circuit 11 to the fourth operation mode (refer to Fig. 2D) and performs an oil cut operation (step S91 in Fig. 11). When determining that oil cut is unnecessary (NO in step S90 in Fig. 11) or when an oil cut operation of step S91 ends, the ECU 80 ends the oil cut step (step S83 in Fig. 10).

Subsequently, the air supply system 10 performs the same steps as when starting supplying air in the first embodiment. Specifically, the air supply system 10 sequentially performs an air supply step that supplies compressed air, which is output from the compressor 4, to the supply circuit 12 (step S80 in Fig. 10), a dryer regeneration step (step S81 in Fig. 10), and an air non-supply step (step S82 in Fig. 10).

Then, the ECU 80 determines whether to end the air supply (step S84 in Fig. 10).

When determining not to end the air supply (NO in step S84 in Fig. 10), the ECU 80 returns to step S83 and continues the air supply step. When determining to end the air supply (YES in step S84 in Fig. 10), the ECU 80 ends the air supply.

As described above, the fifth embodiment has the following advantage in addition to advantages (1) to (12) of the first embodiment to the fourth embodiment described above.
(13) Compressed air containing a relatively large amount of oil is discharged from the drain discharge port 27, and deterioration of the filter 17 resulting from oil and moisture is retarded. Discharging may be performed immediately after the compressor 4 is switched from a non-operation state to an operation state.

### Sixth embodiment

The air supply system according to a sixth embodiment will now be described with reference to Fig. 12. The sixth embodiment differs from the first embodiment in that a forced regeneration process is performed during a load operation of the compressor 4. In the sixth embodiment, during a load operation of the compressor 4, the humidity of compressed air is measured and a forced regeneration process is performed based on the measured humidity.

As shown in Fig. 12, when air supply starts, the ECU 80 performs an air supply operation that supplies compressed air, which is output from the compressor 4, to the supply circuit 12 (step S100 in Fig. 12). Then, the ECU 80 performs a humidity measurement step that measures the humidity of the compressed air supplied to the supply circuit 12 (step S101 in Fig. 12).

The ECU 80 determines whether a regeneration process is necessary (step S102 in Fig. 12).

When determining that a regeneration process is necessary (YES in step S102 in Fig. 12), the ECU 80 shifts the air drying circuit 11 to the third operation mode (refer to Fig. 2C) and forcibly performs a regeneration operation (step S103 in Fig. 12). When determining that a regeneration process is unnecessary (NO in step S102 in Fig. 12), the ECU 80 determines whether to end the air supply while maintaining the load operation (first operation mode) of the compressor 4 (step S104 in Fig. Fig. 12).

When determining not to end the air supply (NO in step S104 in Fig. 12), the ECU 80 returns to step S100 of Fig. 12 and continues the air supply step. When determining to end the air supply step (YES in step S104 in Fig. 12), the ECU 80 ends the air supply.

As described above, the sixth embodiment has the following advantage in addition to advantages (1) to (13) of the first embodiment described above.
(14) A regeneration process can be performed during air supply to retard deterioration of the filter 17.

### Seventh embodiment

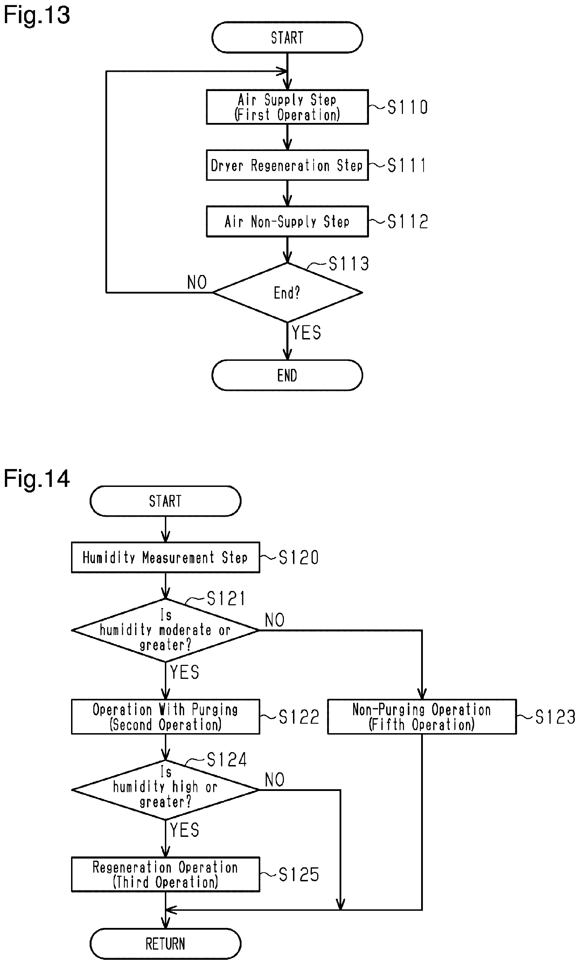

The air supply system according to a seventh embodiment will now be described with reference to Figs. 13 to 16. The seventh embodiment differs from the first embodiment in that an operation for optimizing usage of compressed air is performed instead of the compressor assist operation.

### Operation for optimizing usage of compressed air

An operation for optimizing the usage of compressed air will now be described with reference to Figs. 13 to 16.

A regeneration operation and a purging operation, which restore dehumidification performance of the filter 17, consume a certain amount of compressed air. Thus, the supply of consumed compressed air increases the operation load on the compressor 4. Specifically, an increase in the operation load on the compressor 4 that generates compressed air with the rotational force transmitted from a rotary drive source such as an engine will increase the load on the rotary drive source and increase the consumed amount of energy such as fuel. Conditions for performing a regeneration operation and a purging operation are set to optimize the number of times the regeneration operation and the purging operation are performed so that the usage of compressed air is optimized to reduce the load on the compressor 4.

Further, when neither a regeneration operation nor a purging operation is performed during an idling operation of the compressor 4, the drain discharge valve 25 is closed so that compressed air supplied from the compressor 4 keeps the air pressure in the desiccant of the filter 17 and the air supply passage 18 higher than the atmospheric pressure. This provides an effect corresponding to compressor assist that reduces the operation load on the compressor 4 during the idling operation.

As shown in Fig. 13, when starting the supply of compressed air, the air supply system 10 performs the air supply step that supplies compressed air, which is output from the compressor 4, to the supply circuit 12 (step S110 in Fig. 13). In the air supply step, the air drying circuit 11, which is in the first operation mode, removes moisture and oil from the compressed air, which is supplied from the compressor 4, and outputs the compressed air to the supply circuit 12. The air supply step ends if the air pressure of the supply circuit 12, such as the air pressure inside the air tank, exceeds an upper limit value.

When the air supply operation ends in the air supply step (step S110 in Fig. 13), the air supply system 10 shifts the compressor 4 to a non-operation state and performs a dryer regeneration step (step S111 in Fig. 13). In the dryer regeneration step, a dryer regeneration process that regenerates the filter 17 is performed.

As shown in Fig. 14, in the dryer regeneration process, the ECU 80 performs a humidity measurement step (step S120 in Fig. 14). In the humidity measurement step, the ECU 80 measures the humidity of compressed air based on the humidity measured by the humidity sensor 51 and the temperature measured by the temperature sensor 52. The humidity sensor 51 corresponds to a humidity measurement unit.

Subsequently, the ECU 80 determines whether the humidity is moderate or greater (step S121 in Fig. 14). The ECU 80 determines that the humidity of the compressed air is moderate or greater if the humidity is greater than or equal to a low humidity threshold value. The ECU 80 determines that the humidity of the compressed air is not moderate or greater if the humidity is less than the low humidity threshold value.

When determining that the humidity is moderate or greater (YES in step S121 in Fig. 14), the ECU 80 shifts the air drying circuit 11 to the second operation mode, performs a compressor stop operation (process with purging) (step S122 in Fig. 14) and then determines whether the humidity is high or greater (step S124 in Fig. 14). The ECU 80 determines that the humidity of the compressed air is high or greater if the humidity is greater than or equal to a high humidity threshold value. The ECU 80 determines that the humidity of the compressed air is high or greater if the humidity is less than the high humidity threshold value.

When determining that the humidity is high or greater (YES in step S124 in Fig. 14), the ECU 80 shifts the air drying circuit 11 to the third operation mode and performs a regeneration operation (step S125 in Fig. 14). When the regeneration process ends, the ECU 80 ends the dryer regeneration step (step S111 in Fig. 13) and proceeds to the next step.

When determining that the humidity is less than high (NO in step S124 in Fig. 14), the ECU 80 ends the dryer regeneration step (step S111 in Fig. 13) and proceeds to the next step.

When determining that the humidity is less than moderate (NO in step S121 in Fig. 14), the ECU 80 shifts the air drying circuit 11 to the fifth operation mode and performs a compressor stop operation (non-purging process) (step S123 in Fig. 14). By performing the compressor stop operation (non-purging process), the desiccant of the filter 17 and the air supply passage 18 are not exposed to the atmosphere after the compressor 4 is stopped. Thus, a compressor assist effect can be obtained. This ends the dryer regeneration step (step S111 in Fig. 13), and the next step is performed.

Thus, during an idling operation of the compressor 4, if the humidity of compressed air supplied from the compressor 4 is high and the amount of moisture absorbed in the desiccant is high, the oil and moisture are discharged together with air from the air supply passage 18 and the desiccant of the filter 17, which are connected to the drain discharge valve, to maintain the cleanliness of air (steps S122, S25). In this case, if the humidity is high or greater, a regeneration operation is performed using the compressed air, of which the flow is reversed, from the supply circuit 12 (step S125). If the humidity is moderate or greater, a purging operation is performed using the residual compressed air in the air drying circuit 11 (step S122). Air is not discharged from the air supply passage 18 or the desiccant of the filter 17 as long as the humidity of the compressed air supplied from the compressor 4 is low, the amount of moisture absorbed in the desiccant is low, and the amount of oil discharged together with the compressed air from the compressor 4 is low. This reduces consumption of the compressed air (step S123).

Subsequently, as shown in Fig. 13, the air supply system 10 performs an air non-supply step (step S112 in Fig. 13). In the air non-supply step, the ECU 80 performs an air non-supply process so that the back pressure of the upstream check valve 15 remains high during a compressor stop operation.

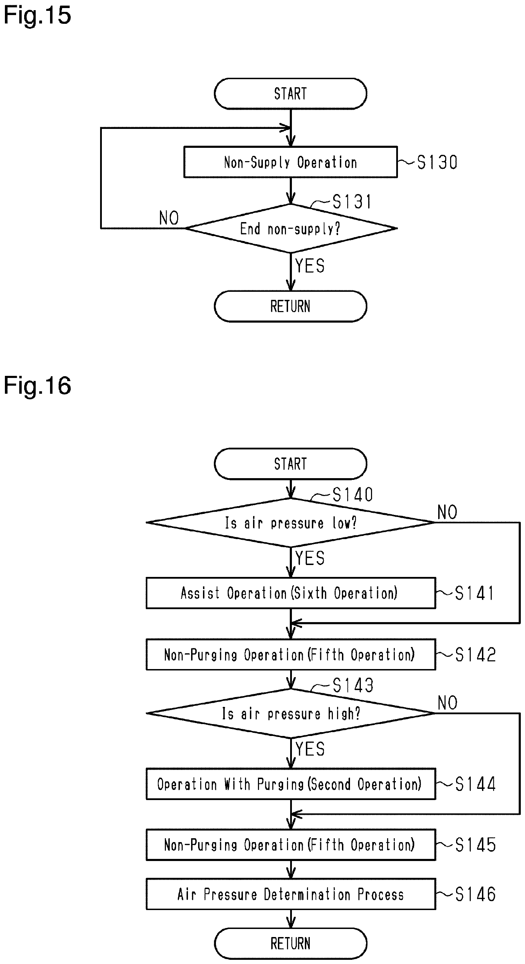

Specifically, as shown in Fig. 15, in the air non-supply process, the ECU 80 performs a non-supply operation (step S130 in Fig. 15). In the non-supply operation, the ECU 80 performs a pressure adjustment step based on the measurement value of the pressure sensor 50 (Fig. 16). In the pressure adjustment step, the ECU 80 performs a pressure adjustment process. For example, in the pressure adjustment process, the air pressure in the desiccant of the filter 17 and the air supply passage 18 may be adjusted.

As shown in Fig. 16, in the pressure adjustment process, the ECU 80 determines whether the air pressure in the desiccant of the filter 17 and the air supply passage 18 is low (step S140 in Fig. 16). The ECU 80 determines that the air pressure is low if the measurement value of the pressure sensor 50 is less than or equal to a low pressure threshold value. The ECU 80 determines that the air pressure is not low if the measurement value of the pressure sensor 50 is greater than the low pressure threshold value. In the seventh embodiment, the upstream check valve 15 is arranged at the downstream side of the pressure sensor 50 where the value of the pressure sensor 50 is stable. This reduces the number of times assist operations and purging operations are performed.

When determining that the air pressure is low (YES in step S140 in Fig. 16), the ECU 80 shifts the air drying circuit 11 to the sixth operation mode and performs an assist operation (step S141 in Fig. 16), and then the ECU 80 shifts the air drying circuit 11 to the fifth operation mode and performs a compressor stop operation (non-purging process) (step S142 in Fig. 16). When determining that air pressure is not low (NO in step S140 in Fig. 16), the ECU 80 shifts the air drying circuit 11 to the fifth operation mode and performs a compressor stop operation (non-purging process) (step S142 in Fig. 16).

The ECU 80 also determines whether the air pressure is high (step S143 in Fig. 16). The ECU 80 determines that the air pressure is high if a measurement value of the pressure sensor 50 is greater than or equal to a high pressure threshold value. The ECU 80 determines that the air pressure is not high if the measurement value of the pressure sensor 50 is less than the low pressure threshold value.

When determining that the air pressure is high (YES in step S143 in Fig. 16), the ECU 80 shifts the air drying circuit 11 to the second operation mode and performs a compressor stop operation (process with purging) (step S144 in Fig. 16). Then, the ECU 80 shifts the air drying circuit 11 to the fifth operation mode and performs a compressor stop operation (non-purging process) (step S145 in Fig. 16). When determining that the air pressure is not high (NO in step S143 in Fig. 16), the ECU 80 shifts the air drying circuit 11 to the fifth operation mode and performs a compressor stop operation (non-purging process) (step S145 in Fig. 16). This keeps the back pressure of the upstream check valve 15 higher than the atmospheric pressure and allows compressor assist to be performed. That is, the height of air pressure has a relationship expressed by "atmospheric pressure < low pressure threshold value < high pressure threshold value." Next, the ECU 80 performs an air pressure determination process (step S146 in Fig. 16). In the air pressure determination process, air pressure is determined to be appropriate if the measurement value of the pressure sensor 50 is less than the high pressure threshold value and greater than or equal to the low pressure threshold value. The air pressure is determined to be inappropriate if the measurement value is greater than or equal to the high pressure threshold value or less than the low pressure threshold value.

As shown in Fig. 15, when the pressure adjustment process ends, the non-supply operation (step S130 in Fig. Fig. 15) ends and the next step is performed.

Subsequently, it is determined whether to end the air non-supply process (step S131 in Fig. 15). The ECU 80 determines to end the air non-supply process if the compressor 4 needs to perform a load operation. The ECU 80 determines not to end the air non-supply process if the compressor 4 does not need to perform the load operation.

More specifically, when determining not to end the air non-supply process (NO in step S131 in Fig. 15), the ECU 80 continues to perform the non-supply operation (S130 in Fig. 15). When determining to end the air non-supply process (YES in step S131 in Fig. 15), the ECU 80 ends the air non-supply step (step S113 in Fig. 13) and proceeds to the next step.

Then, as shown in Fig. 13, it is determined whether to end air supply (step S113 in Fig. 13). The ECU 80 determines to end the air supply based on engine stop of the vehicle or the like. The ECU 80 determines not to end the air supply based on continuous engine rotation of the vehicle or the like.

When determining not to end the air supply (NO in step S113 in Fig. 13), the ECU 80 returns to step S110 and performs the processes from the air supply step (step S110 in Fig. 13). When determining to end the air supply (YES in step S113 in Fig. 13), the ECU 80 stops the air supply.

As described above, the seventh embodiment has the following advantages.
(15) If the same electromagnetic valve is used for an idling operation (unloading) of the compressor 4 and for switching the drain discharge valve 25, the air in the supply passage and the desiccant is exposed to the atmosphere during the idling operation of the compressor 4. Thus, some of the compressed air that is supplied from the compressor 4 would be discharged without being used. This would consume the compressed air. With the above structure, the unloading control valve 26B switches the compressor 4 between a load operation and an idling operation, and the governor 26A switches the drain discharge valve 25 between a closed state and a connection state in accordance with the humidity measured by the humidity measurement unit. Thus, during an idling operation of the compressor 4, the drain discharge valve 25 can be kept closed. For example, when air is dry, the drain discharge valve 25 can be kept closed so that the air pressure provided by the compressor 4 keeps the air pressure in the air supply passage 18 and the air pressure of the desiccant of the filter 17 of a dryer higher than the atmospheric pressure. This reduces the consumption amount of compressed air.

(16) During an idling operation of the compressor 4, if the humidity of compressed air supplied is high, the amount of moisture absorbed in the desiccant of the filter 17 is high. Thus, oil and moisture will be discharged together with air from the air supply passage 18 and the desiccant of the filter 17, which are connected to the drain discharge valve 25, to maintain the cleanliness of air. If the humidity of the compressed air supplied is low, the amount of moisture absorbed in the desiccant of the filter 17 is low, Thus the air pressure in the air supply passage 18 and the desiccant of the filter 17 will be maintained. This reduces consumption of the compressed air.

(17) By opening the regeneration control valve 21, the flow of dry and compressed air from, for example, an air tank, is reversed. This allows the dry air, of which the flow has been reversed, to perform a regeneration process on the desiccant of the filter 17.

(18) The regeneration control valve can be controlled to be open for a predetermined period so that a regeneration process can be performed during the predetermined period.

(19) A pressure adjustment process maintains a high air pressure in the air supply passage 18 and the desiccant of the filter 17 even after a regeneration process is performed. For example, compressor assist can be performed.

### Other embodiments

The above embodiments may be modified as follows.

The above embodiments may be combined as long as the combined modifications are not in technical contradiction. For example, the first to the fourth embodiments may be each combined with at least one of the fifth embodiment and the sixth embodiment. At least one of the fifth embodiment and the sixth embodiment may be combined with the seventh embodiment.

The first embodiment is an example of a case in which the pressure sensor 50 is arranged at the upstream side of the upstream check valve 15. Instead, the pressure sensor may be arranged at the downstream side of the upstream check valve. This allows for direct detection of the air pressure in the branch passage.

In the above embodiments, the filter 17 includes the desiccant and the filtration portion. Instead, the filter 17 may include one of the desiccant and the filtration portion.

The above embodiments include the filter 17. In addition, an oil mist separator may be arranged at the upstream side of the filter 17.

The oil mist separator includes a filter that separates gas from liquid when compressed air strikes the filter, which captures the oil contained in the compressed air, which is fed from the compressor 4. The filter may be formed by compression-molding of a metal material. Alternatively, the filter may be a porous material such as a sponge. The oil mist separator improves the cleanliness of compressed air.

After shifting the air drying circuit 11 to the third operation mode and performing a regeneration process, the ECU 80 may shift the air drying circuit 11 to the sixth operation mode by deactivating the governor 26A to close the drain discharge valve 25 without shifting the air drying circuit 11 to the fifth operation mode or the second operation mode to allow for compressor assistance. This promptly maintains a high air pressure in the connection passage and the desiccant even after a regeneration process is performed. Thus, compressor assistance can be performed.

In the above embodiments, the humidity sensor 51, the temperature sensor 52, and the ECU 80 form the humidity measurement unit. Instead, the humidity measurement unit may be formed by a device that includes a sensor as long as humidity is measured. Calculations do not have to be performed by the ECU.

In the above embodiments, the air supply system 10 is installed in automobiles such as trucks, buses, and construction machines. Alternatively, the air supply system may be installed in other vehicles such as passenger cars, railway vehicles, and the like.

## Claims

1. An air supply system (10), comprising:
a compressor (4) including a load operation mode, in which the compressor (4) feeds compressed air, and an idling operation mode, in which the compressor (4) does not feed compressed air;
a desiccant (17) configured to remove moisture from the compressed air fed by the compressor (4);
a connection passage (18) that connects the compressor (4) and the desiccant (17), wherein the connection passage (18) permits the compressed air to flow;
a first electromagnetic valve (26B) configured to selectively switch the compressor (4) between the load operation mode and the idling operation mode, wherein the compressor (4) is configured to be switched to the idling operation mode when the first electromagnetic valve (26B) is activated, and the compressor (4) is configured to be switched to the load operation mode when the first electromagnetic valve (26B) is deactivated;
a drain discharge valve (25) that is connected to a branch passage (16) branched from the connection passage (18), wherein the drain discharge valve (25) is configured to open the branch passage (16) when a second electromagnetic valve (26A) is activated, and the drain discharge valve (25) is configured to close the branch passage (16) when the second electromagnetic valve (26A) is deactivated; and
a controller (80) configured to switch activation and deactivation of the first electromagnetic valve (26B) and activation and deactivation of the second electromagnetic valve (26A),
**characterized in that**
the air supply system (10) further comprises:
a downstream check valve (19) that permits air to flow from the desiccant (17) toward a side opposite the compressor (4); and
a regeneration control valve (21) arranged in a passage that is connected in parallel to a passage in which the downstream check valve (19) is arranged, wherein
the controller (80) is configured to open and close the regeneration control valve (21).

2. The air supply system (10) according to claim 1, wherein the controller (80) is configured to control the second electromagnetic valve (26A) so that the second electromagnetic valve (26A) operates the drain discharge valve (25) to close the branch passage (16) for at least part of a period during which the first electromagnetic valve (26B) is activated.

3. The air supply system (10) according to claim 1 or 2, further comprising an upstream check valve (15) arranged between the compressor (4) and the branch passage (16) in the connection passage (18), wherein the upstream check valve (15) permits the compressor (4) to supply air.

4. The air supply system (10) according to any one of claims 1 to 3, wherein the controller (80) is further configured to open the regeneration control valve (21) for a predetermined period when the first electromagnetic valve (26B) is activated and the second electromagnetic valve (26A) operates the drain discharge valve (25) to close the branch passage (16).

5. The air supply system (10) according to claim 4, further comprising a pressure sensor (50) arranged in the connection passage (18) and configured to detect air pressure, wherein the controller (80) is configured to determine the predetermined period in accordance with the air pressure detected by the pressure sensor (50).

6. The air supply system (10) according to claim 4 or 5, wherein
the controller (80) is configured to perform a non-purging process, a purging process, a regeneration process, and a pressurization process when the first electromagnetic valve (26B) is activated,
the non-purging process includes closing the branch passage (16) by operating the drain discharge valve (25) with the second electromagnetic valve (26A), and closing the regeneration control valve (21),
the purging process includes opening the branch passage (16) by operating the drain discharge valve (25) with the second electromagnetic valve (26A), and closing the regeneration control valve (21),
the regeneration process includes opening the branch passage (16) by operating the drain discharge valve (25) with the second electromagnetic valve (26A), and opening the regeneration control valve (21), and
the pressurization process includes closing the branch passage (16) by operating the drain discharge valve (25) with the second electromagnetic valve (26A), and opening the regeneration control valve (21).

7. The air supply system (10) according to claim 6, wherein the controller (80) is configured to perform an adjustment step that selects and performs one of the non-purging process, the purging process, and the pressurization process so that air pressure in the connection passage (18) is maintained at a predetermined value.

8. The air supply system (10) according to claim 7, wherein the controller (80) is configured to sequentially perform the regeneration process and the pressurization process prior to the adjustment step.

## Patentansprüche

1. Ein Luftzufuhrsystem (10), umfassend:
einen Kompressor (4), der einen Ladebetriebsmodus enthält, in dem der Kompressor (4) komprimierte Luft zuführt, und einen Leerlaufbetriebsmodus, in dem der Kompressor (4) keine komprimierte Luft zuführt;
ein Trocknungsmittel (17), das so konfiguriert ist, dass es Feuchtigkeit aus der von dem Kompressor (4) zugeführten komprimierten Luft entfernt;
einen Verbindungskanal (18), der den Kompressor (4) und das Trocknungsmittel (17) verbindet, wobei es der Verbindungskanal (18) der komprimierten Luft ermöglicht, zu strömen;
ein erstes elektromagnetisches Ventil (26B), das so konfiguriert ist, dass es den Kompressor (4) selektiv zwischen dem Lastbetriebsmodus und dem Leerlaufbetriebsmodus umschaltet, wobei der Kompressor (4) so konfiguriert ist, dass er in den Leerlaufbetriebsmodus geschaltet wird, wenn das erste elektromagnetische Ventil (26B) aktiviert wird, und der Kompressor (4) so konfiguriert ist, dass er in den Lastbetriebsmodus geschaltet wird, wenn das erste elektromagnetische Ventil (26B) deaktiviert wird;
ein Ablassventil (25), das mit einem von dem Verbindungskanal (18) abgezweigten Zweigkanal (16) verbunden ist, wobei das Ablassventil (25) so konfiguriert ist, dass es den Zweigkanal (16) öffnet, wenn ein zweites elektromagnetisches Ventil (26A) aktiviert wird, und das Ablassventil (25) so konfiguriert ist, dass es den Zweigkanal (16) schließt, wenn das zweite elektromagnetische Ventil (26A) deaktiviert wird; und
einen Controller (80), der so konfiguriert ist, dass er die Aktivierung und Deaktivierung des ersten elektromagnetischen Ventils (26B) und die Aktivierung und Deaktivierung des zweiten elektromagnetischen Ventils (26A) schaltet,
**dadurch gekennzeichnet, dass**
das Luftzufuhrsystem (10) ferner umfasst:
ein stromabwärtiges Rückschlagventil (19), das es der Luft ermöglicht, vom Trocknungsmittel (17) zu einer dem Kompressor (4) gegenüberliegenden Seite ermöglicht; und
ein Regenerationssteuerventil (21), das in einem Kanal angeordnet ist, der parallel zu einem Kanal verbunden ist, in dem das stromabwärtige Rückschlagventil (19) angeordnet ist, wobei
der Controller (80) zum Öffnen und Schließen des Regenerationssteuerventils (21) konfiguriert ist.

2. Das Luftzufuhrsystem (10) nach Anspruch 1, wobei der Controller (80) so konfiguriert ist, dass er das zweite elektromagnetische Ventil (26A) so steuert, dass das zweite elektromagnetische Ventil (26A) das Ablassventil (25) betätigt, um den Zweigkanal (16) für zumindest einen Teil einer Periode zu schließen, während der das erste elektromagnetische Ventil (26B) aktiviert ist.

3. Das Luftzufuhrsystem (10) nach Anspruch 1 oder 2, ferner umfassend ein stromaufwärtiges Rückschlagventil (15), das zwischen dem Kompressor (4) und dem Zweigkanal (16) in dem Verbindungskanal (18) angeordnet ist, wobei das stromaufwärtige Rückschlagventil (15) es dem Kompressor (4) ermöglicht, Luft zuzuführen.

4. Das Luftzufuhrsystem (10) nach irgendeinem der Ansprüche 1 bis 3, wobei der Controller (80) ferner so konfiguriert ist, dass er das Regenerationssteuerventil (21) für eine vorgegebene Periode öffnet, wenn das erste elektromagnetische Ventil (26B) aktiviert ist und das zweite elektromagnetische Ventil (26A) das Ablassventil (25) betätigt, um den Zweigkanal (16) zu schließen.

5. Das Luftzufuhrsystem (10) nach Anspruch 4, ferner umfassend einen Drucksensor (50) umfasst, der in dem Verbindungskanal (18) angeordnet und so konfiguriert ist, dass er den Luftdruck detektiert, wobei der Controller (80) so konfiguriert ist, dass er die vorgegebene Periode in Übereinstimmung mit dem von dem Drucksensor (50) detektierten Luftdruck bestimmt.

6. Das Luftzufuhrsystem (10) nach Anspruch 4 oder 5, wobei
der Controller (80) so konfiguriert ist, dass er einen Nicht-Spül-Prozess, einen Spülprozess, einen Regenerationsprozess und einen Druckbeaufschlagungsprozess durchführt, wenn das erste elektromagnetische Ventil (26B) aktiviert ist,
der Nicht-Spül-Prozess das Schließen des Zweigkanals (16) durch Betätigung des Ablassventils (25) mit dem zweiten elektromagnetischen Ventil (26A) und das Schließen des Regenerationssteuerventils (21) enthält,
der Spülprozess das Öffnen des Zweigkanals (16) durch Betätigung des Ablassventils (25) mit dem zweiten elektromagnetischen Ventil (26A) und das Schließen des Regenerationssteuerventils (21) enthält,
der Regenerationsprozess das Öffnen des Zweigkanals (16) durch Betätigung des Ablassventils (25) mit dem zweiten elektromagnetischen Ventil (26A) und das Öffnen des Regenerationssteuerventils (21) enthält, und
der Druckbeaufschlagungsprozess das Schließen des Zweigkanals (16) durch Betätigung des Ablassventils (25) mit dem zweiten elektromagnetischen Ventil (26A) und das Öffnen des Regenerationssteuerventils (21) enthält.

7. Das Luftzufuhrsystem (10) nach Anspruch 6, wobei der Controller (80) so konfiguriert ist, dass er einen Einstellschritt durchführt, der einen von dem Nicht-Spül-Prozess, dem Spülprozess und dem Druckbeaufschlagungsprozess auswählt und durchführt, sodass der Luftdruck in dem Verbindungskanal (18) auf einem vorgegebenen Wert gehalten wird.

8. Das Luftzufuhrsystem (10) nach Anspruch 7, wobei der Controller (80) so konfiguriert ist, dass er sequentiell den Regenerationsprozess und den Druckbeaufschlagungsprozess vor dem Einstellschritt durchführt.

## Revendications

1. Système d'alimentation en air (10), comprenant :
un compresseur (4) comprenant un mode de fonctionnement en charge, dans lequel le compresseur (4) fournit l'air comprimé, et un mode de fonctionnement à vide, dans lequel le compresseur (4) ne fournit pas l'air comprimé ;
un dessiccateur (17) configuré pour éliminer l'humidité de l'air comprimé fourni par le compresseur (4) ;
un passage de connexion (18) qui relie le compresseur (4) et le dessiccateur (17), dans lequel le passage de connexion (18) permet à l'air comprimé de circuler ;
une première vanne électromagnétique (26B) configurée pour commuter sélectivement le compresseur (4) entre le mode de fonctionnement en charge et le mode de fonctionnement au ralenti, le compresseur (4) étant configuré pour passer en mode de fonctionnement au ralenti lorsque la première vanne électromagnétique (26B) est activée, et le compresseur (4) étant configuré pour passer en mode de fonctionnement en charge lorsque la première vanne électromagnétique (26B) est désactivée ;
une vanne de vidange (25) reliée à un passage de dérivation (16) dérivé du passage de connexion (18), la vanne de vidange (25) étant configurée pour ouvrir le passage de dérivation (16) lorsqu'une seconde vanne électromagnétique (26A) est activée, et la vanne de vidange (25) étant configurée pour fermer le passage de dérivation (16) lorsque la seconde vanne électromagnétique (26A) est désactivée ; et
un dispositif de commande (80) configuré pour commuter l'activation et la désactivation de la première vanne électromagnétique (26B) et l'activation et la désactivation de la seconde vanne électromagnétique (26A),
**caractérisé par le fait que**
le système d'alimentation en air (10) comprend en outre :
un clapet anti-retour en aval (19) qui permet à l'air de s'écouler du dessiccateur (17) vers un côté opposé au compresseur (4) ; et
une vanne de commande de régénération (21) disposée dans un passage qui est connecté en parallèle à un passage dans lequel le clapet anti-retour en aval (19) est disposé, dans lequel
le dispositif de commande (80) est configuré pour ouvrir et fermer la vanne de commande de régénération (21).

2. Système d'alimentation en air (10) selon la revendication 1, dans lequel le dispositif de commande (80) est configuré pour commander la seconde vanne électromagnétique (26A) de sorte que la seconde vanne électromagnétique (26A) actionne la vanne d'évacuation (25) pour fermer le passage de dérivation (16) pendant au moins une partie d'une période au cours de laquelle la première vanne électromagnétique (26B) est activée.

3. Système d'alimentation en air (10) selon les revendications 1 ou 2, comprenant en outre un clapet anti-retour en amont (15) placé entre le compresseur (4) et le passage de dérivation (16) dans le passage de connexion (18), dans lequel le clapet anti-retour en amont (15) permet au compresseur (4) de fournir de l'air.

4. Système d'alimentation en air (10) selon l'une des revendications 1 à 3, dans lequel le dispositif de commande (80) est en outre configuré pour ouvrir la vanne de commande de régénération (21) pendant une période prédéterminée lorsque la première vanne électromagnétique (26B) est activée et que la seconde vanne électromagnétique (26A) actionne la vanne d'évacuation (25) pour fermer le passage de dérivation (16).

5. Système d'alimentation en air (10) selon la revendication 4, comprenant en outre un capteur de pression (50) disposé dans le passage de connexion (18) et configuré pour détecter la pression de l'air, dans lequel le dispositif de commande (80) est configuré pour déterminer la période prédéterminée en fonction de la pression de l'air détectée par le capteur de pression (50).

6. Système d'alimentation en air (10) selon la revendication 4 ou 5, dans lequel
le dispositif de commande (80) est configuré pour effectuer un processus de non-purge, un processus de purge, un processus de régénération et un processus de pressurisation lorsque la première vanne électromagnétique (26B) est activée,
le processus de non-purge consiste à fermer le passage de dérivation (16) en actionnant la vanne de vidange (25) avec la seconde vanne électromagnétique (26A), et à fermer la vanne de commande de régénération (21),
le processus de purge consiste à ouvrir le passage de dérivation (16) en actionnant la vanne de décharge (25) avec la seconde vanne électromagnétique (26A), et à fermer la vanne de commande de régénération (21),
le processus de régénération consiste à ouvrir le passage de dérivation (16) en actionnant la vanne de vidange (25) avec la seconde vanne électromagnétique (26A), et à ouvrir la vanne de commande de régénération (21), et
le processus de pressurisation consiste à fermer le passage de dérivation (16) en actionnant la vanne de vidange (25) avec la seconde vanne électromagnétique (26A), et à ouvrir la vanne de commande de régénération (21).

7. Système d'alimentation en air (10) selon la revendication 6, dans lequel le dispositif de commande (80) est configuré pour effectuer une étape de réglage qui sélectionne et exécute l'un des processus de non-purge, de purge et de pressurisation de sorte que la pression d'air dans le passage de connexion (18) soit maintenue à une valeur prédéterminée.

8. Système d'alimentation en air (10) selon la revendication 7, dans lequel le dispositif de commande (80) est configuré pour effectuer séquentiellement le processus de régénération et le processus de pressurisation avant l'étape d'ajustement.
